# EUROPEAN PATENT APPLICATION

(11) **EP 4 711 658 A1**
(43) Date of publication of application: **18.03.2026**
(21) Application number: 23955237.5
(22) Date of filing: 26.10.2023
(51) Int. Cl.: F16L 21/02

(54) **COMPRESSION CONNECTION JOINT AND PIPE**

(30) Priority: 12.10.2023 CN 202322746078 U
(71) Applicant: Rifeng Enterprise (Foshan) Co., Ltd., Sanshui Foshan, Guangdong 528100 (CN); Rifeng Enterprise Group Co., Ltd., Foshan, Guangdong 528000 (CN); Rifeng Technology Co., Ltd., Foshan, Guangdong 528000 (CN)
(72) Inventor: CAO, Huijian, Foshan, Guangdong 528100 (CN); LIN, Xiyong, Foshan, Guangdong 528100 (CN); DIAO, Zhenbin, Foshan, Guangdong 528100 (CN); ZHANG, Qiang, Foshan, Guangdong 528100 (CN); HE, Wangzhi, Foshan, Guangdong 528100 (CN)
(74) Representative: Lapienis, Juozas
(86) International application number: PCT/CN2023/126643
(87) International publication number: WO 2025/076863

(57) **Abstract**

A compression connection joint and a pipe. The compression connection joint comprises a joint body (1), a compressing sleeve (2), a retaining ring (3), and sealing rings (4). The joint body comprises an insertion portion (5), the retaining ring being disposed at a root portion (6) of the insertion portion, and the compressing sleeve being sleeved on the insertion portion and forming, together with the insertion portion and the retaining ring, an accommodating cavity for insertion of a pipe. Three sealing grooves (701, 702, 703) are sequentially disposed on the outer surface of the insertion portion along the axial direction, one sealing ring being correspondingly disposed within each sealing groove, and one first square gear ring (8) and at least two first inverted gear rings (9) being sequentially disposed on the insertion portion between two adjacent sealing grooves along the direction close to the root portion of the insertion portion. The compression connection joint is convenient and easy to operate, achieves sealing and leakage prevention, and is suited to six compression ring types, namely U, H, RF, TH, B, and RFZ, having a wide application range.

## Description

### CROSS-REFERENCE TO RELATED APPLICATION

The application claims priority to Chinese Patent Application No. 2023227460785, filed with the China National Intellectual Property Administration on October 12, 2023, entitled "COMPRESSION CONNECTION JOINT AND PIPE", the entirety of which is incorporated herein by reference.

### TECHNICAL FIELD

The present invention relates to the technical field of pipe connections, and in particular to a compression connection joint and a pipe.

### BACKGROUND ART

In the prior art of pipe connections, compression connection joints have the advantages of simple structure, convenient mounting, and low cost, and thus have been widely used. The inventors have found by research that after years of development of compression connection joints, various types of compression tools have appeared in markets across different regions. Among them, six types of tools, namely U-type, H-type, RF-type, TH-type, B-type, and RFZ-type, are more widely used. Since the positions of annular teeth at compression rings of these six types of tools are different from one another, current compression fittings with leak-proof compressing functions can be promoted only in market areas where the same types of compressing tools are available, which seriously limits the application range of the compression connection joints.

### SUMMARY

An object of the present invention is to provide a compression connection joint and a pipe, which can achieve the pipe connection and sealing effects after being compressed by using a specialized tool, and for which a wide range of compression tools are selectable, and to which six types of compression rings commonly used on the market, namely U-type, H-type, RF-type, TH-type, B-type, and RFZ-type, are all applicable.

An embodiment of the present invention is implemented as follows.

In a first aspect, the present invention provides a compression connection joint, including a joint body, a compressing sleeve, a retaining ring, and a sealing ring. The joint body includes an insertion portion. The retaining ring is disposed at a root portion of the insertion portion. The compressing sleeve is sleeved around the insertion portion and forms, together with the insertion portion and the retaining ring, an accommodating cavity for insertion of a pipe.

Three sealing grooves are sequentially disposed in an outer surface of the insertion portion along an axial direction. One sealing ring is correspondingly disposed in each of the sealing grooves. One first square toothed ring and at least two first inverted toothed rings are sequentially disposed on the insertion portion between two adjacent sealing grooves along a direction close to the root portion of the insertion portion.

In an optional implementation, a second square toothed ring and a U-shaped groove are sequentially disposed at the insertion portion along the direction close to the root portion, and both the second square toothed ring and the U-shaped groove are disposed on one side of the three sealing grooves close to the root portion of the insertion portion.

In an optional implementation, a first tapered surface is disposed at an end portion of the insertion portion, and a second inverted toothed ring is disposed between the first tapered surface and the three sealing grooves.

In an optional implementation, both the first inverted toothed rings and the second inverted toothed ring are provided with a guide beveled surface and a stop vertical surface, and the stop vertical surface is disposed close to the root portion of the insertion portion.

In an optional implementation, a transitional notch is disposed on one side of the three sealing grooves close to the end portion of the insertion portion.

In an optional implementation, one end of the compressing sleeve is inserted into the retaining ring, an annular flange is disposed at the end of the compressing sleeve that is inserted into the retaining ring, and the retaining ring is provided with a recess for accommodating the annular flange.

In an optional implementation, a ring buckle is disposed at one end of the retaining ring connecting with the insertion portion, and the insertion portion is provided with an annular groove for accommodating the ring buckle.

In an optional implementation, the retaining ring is provided with an observation hole communicating with the accommodating cavity, and the observation hole is located between the ring buckle and the recess.

In an optional implementation, the retaining ring is provided with a bevel angle at its end remote from the end portion of the insertion portion.

In a second aspect, the present invention provides a pipe, including a compression connection joint described in any one of the foregoing implementations.

The embodiments of the present invention have the following beneficial effects.

The structure of the insertion portion in the joint body can be matched with annular teeth on any of six types of compression rings, namely U-type, H-type, RF-type, TH-type, B-type, and RFZ-type, and is thus suited to the above-mentioned various types of compression tools. It has a wide range of applications and meets different compression requirements. Moreover, no matter which type of compression ring described above is used, the compression connection joint of the present invention can connect pipes and achieve a sealed connecting effect with good sealing performance.

In addition, the present invention is convenient and easy in operation, enables sealing and leakage prevention, is suited to six types of compression rings, namely U-type, H-type, RF-type, TH-type, B-type, and RFZ-type, and thus has a wide range of applications.

### BRIEF DESCRIPTION OF DRAWINGS

In order to more clearly illustrate the technical solutions of embodiments of the present invention, drawings required to be used in the embodiments will be described briefly below. It is understood that the drawings below are merely illustrative of some embodiments of the present invention, and thus should not be considered as limiting its scope. For those of ordinary skill in the art, other relevant drawings can be obtained according to these drawings without any inventive effort.
FIG. 1 is a schematic half-sectional view of a compression connection joint of the present invention.
FIG. 2 is a half-sectional exploded view of a compression connection joint of the present invention.
FIG. 3 is a schematic half-sectional view of a compression connection joint after being compressed with a U-type compression ring of the present invention.
FIG. 4 is a schematic half-sectional view of a compression connection joint after being compressed with an H-type compression ring of the present invention.
FIG. 5 is a schematic half-sectional view of a compression connection joint after being compressed with an RF-type compression ring of the present invention.
FIG. 6 is a schematic half-sectional view of a compression connection joint after being compressed with a TH-type compression ring of the present invention.
FIG. 7 is a schematic half-sectional view of a compression connection joint after being compressed with a B-type compression ring of the present invention.
FIG. 8 is a schematic half-sectional view of a compression connection joint after being compressed with an RFZ-type compression ring of the present invention.
FIG. 9 is a schematic half-sectional view of a compression connection joint of the present invention when it is uncompressed.

Reference Numerals: 1-joint body; 2-compressing sleeve; 3-retaining ring; 4-sealing ring; 5-insertion portion; 6-root portion; 701-first sealing groove; 702-second sealing groove; 703-third sealing groove; 8-first square toothed ring; 9-first inverted toothed ring; 140-second square toothed ring; 150-U-shaped groove; 18-first tapered surface; 19-second inverted toothed ring; 20-transitional notch; 201-annular flange; 202-annular small-angled flange; 302-recess; 301-ring buckle; 21-annular groove; 303-observation hole; 305-bevel angle; 304-maximum outer ring;
10-U-type compression ring; 101-first annular tooth; 102-second annular tooth; 103-third annular tooth; 11-H-type compression ring; 111-fourth annular tooth; 112-fifth annular tooth; 113-sixth annular tooth; 12-RF-type compression ring; 121-seventh annular tooth; 122-eighth annular tooth; 123-ninth annular tooth; 13-TH-type compression ring; 131-tenth annular tooth; 132-eleventh annular tooth; 133-compression groove; 14-B-type compression ring; 141-thirteenth annular tooth; 142-fourteenth annular tooth; 143-second tapered surface; 15-RFZ-type compression ring; 151-inner annular surface.

### DETAILED DESCRIPTION OF EMBODIMENTS

In order to further clarify the objects, technical solutions, and advantages of the embodiments of the present invention, the technical solutions of the embodiments of the present invention will be described below clearly and completely with reference to the drawings of the embodiments of the present invention. It is apparent that the embodiments to be described are some, but not all of the embodiments of the present invention. Generally, the components of the embodiments of the present invention, as described and illustrated in the figures herein, can be arranged and designed in various different configurations.

Thus, the following detailed description of the embodiments of the present invention, as represented in the figures, is not intended to limit the scope of the present invention as claimed, but is merely representative of selected embodiments of the present invention. All the other embodiments obtained by those of ordinary skill in the art based on the embodiments of the present invention without inventive efforts will fall within the scope of protection of the present invention.

It should be noted that similar reference numerals and letters refer to similar items in the following figures, and thus once an item is defined in one figure, it cannot be further defined or explained in the following figures.

In the description of the present invention, it should be noted that the terms such as "center", "up", "down", "left", "right", "vertical", "horizontal", "inside", and "outside" indicate the orientation or positional relationships shown based on the figures, or the orientation or positional relationships in which the product of the invention is commonly placed in use, and these terms are intended only to facilitate the description of the present invention and simplify the description, but not intended to indicate or imply that the referred devices or components must be in a particular orientation or constructed or operated in the particular orientation, and therefore should not be construed as limiting the present invention. In addition, the terms such as "first", "second", and "third" are used for distinguishing the description only, and should not be understood as an indication or implication of relative importance.

In addition, the term "horizontal", "vertical", or the like means that a component can be slightly inclined, rather than being required to be absolutely horizontal or overhanging. For example, by the term "horizontal", it is simply meant that its direction is more horizontal than the term "vertical", and it is not meant that the structure must be completely horizontal, but it is meant that the structure can be slightly inclined.

In the description of the present invention, it should also be noted that the terms "dispose", "mount", "connect", and "link" should be understood in a broad sense unless otherwise expressly specified or defined. For example, a connection can be a fixed connection, or a detachable connection, or an integral connection, can be a mechanical connection or an electric connection, or can be a direct connection or an indirect connection via an intermediate medium or internal communication between two components. The specific meanings of the above-mentioned terms in the present invention can be understood by those of ordinary skill in the art according to specific situations.

### First Embodiment

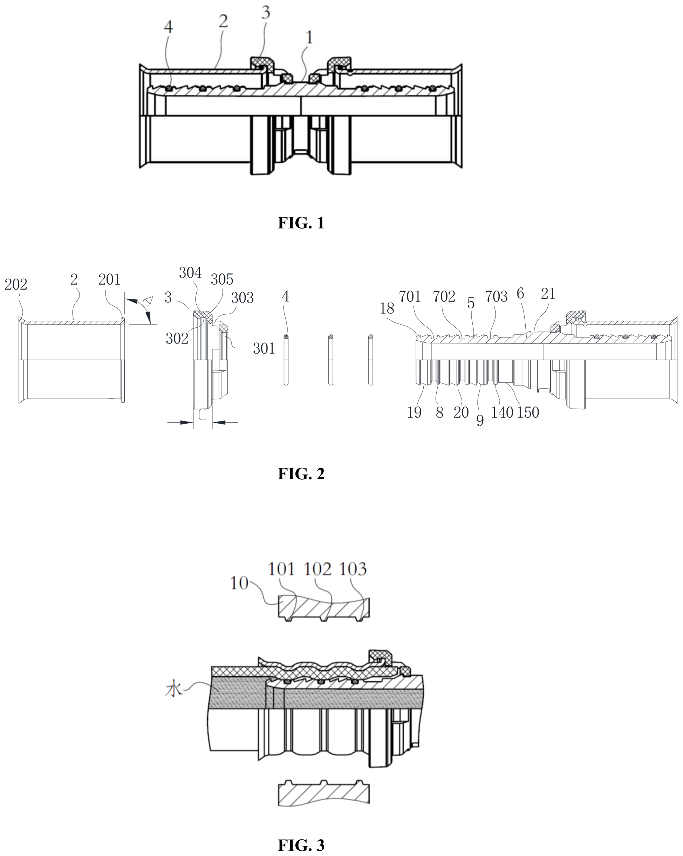

Referring to FIG. 1 and FIG. 2, this embodiment provides a compression connection joint, including a joint body 1, a compressing sleeve 2, a retaining ring 3, and a sealing ring 4. The joint body 1 includes an insertion portion 5. The retaining ring 3 is disposed at a root portion 6 of the insertion portion 5. The compressing sleeve 2 is sleeved around the insertion portion 5 and forms, together with the insertion portion 5 and the retaining ring 3, an accommodating cavity for insertion of a pipe.

Three sealing grooves are sequentially disposed in an outer surface of the insertion portion 5 along an axial direction. One sealing ring 4 is correspondingly disposed in each of the sealing grooves. One first square toothed ring 8 and at least two first inverted toothed rings 9 are sequentially disposed on the insertion portion 5 between two adjacent sealing grooves along a direction close to the root portion 6 of the insertion portion 5.

The compression connection joint in this embodiment can be used for connection between two pipes, or for connection between three or even more pipes. Specifically, when the joint body 1 has only two insertion portions 5, it can be used for connection between two pipes, and when the joint body 1 includes three or more insertion portions 5, it can be used for connection between three or more pipes.

During the use of the compression connection joint of this embodiment, the compression connection joint is assembled first. Specifically, the retaining ring 3 is first sleeved around the root portion 6 of the insertion portion 5, the sealing rings 4 are mounted in the corresponding sealing grooves, then the compressing sleeve 2 is sleeved around the insertion portion 5 to form an accommodating cavity, and then a pipe to be connected is inserted into a specified position in the accommodating cavity, so that the connection of the pipe is completed. After the connection of the pipe is completed, a compression ring can be used to apply pressure to the compressing sleeve 2, so that a pressing force is generated between the pipe and the sealing rings 4 under the action of the compressing sleeve 2, thereby achieving the sealing effect.

In this embodiment, a first sealing groove 701, a second sealing groove 702, and a third sealing groove 703 are sequentially disposed in the outer surface of the insertion portion 5 along the direction close to the root portion 6 of the insertion portion 5, and the first square toothed ring 8 and the first inverted toothed ring 9 are suitably disposed between two adjacent sealing grooves. In this way, any one of six types of compression rings, namely U-type, H-type, RF-type, TH-type, B-type, and RFZ-type can be used to apply pressure to the compressing sleeve 2, so that a compressing force can be generated between the pipe and at least one sealing ring 4 under the action of the compressing sleeve 2, thereby achieving the sealing effect. By providing the first inverted toothed ring 9, the separation of the pipe from the accommodating cavity can be avoided to a certain extent before compressing.

Specifically, as shown in FIG. 3, when the compression connection joint of the present invention is compressed by using a U-type compression ring 10, a first annular tooth 101 and a second annular tooth 102 on the U-type compression ring 10 are aligned with the positions of the first sealing groove 701 and the second sealing groove 702, respectively, so that the sealing rings 4 in the grooves are both in a completely compressed state. Although the third annular tooth 103 is not aligned with the third sealing groove 703, it enables the sealing ring 4 in the groove to be compressed and deformed to a certain extent, thereby achieving the sealing effect.

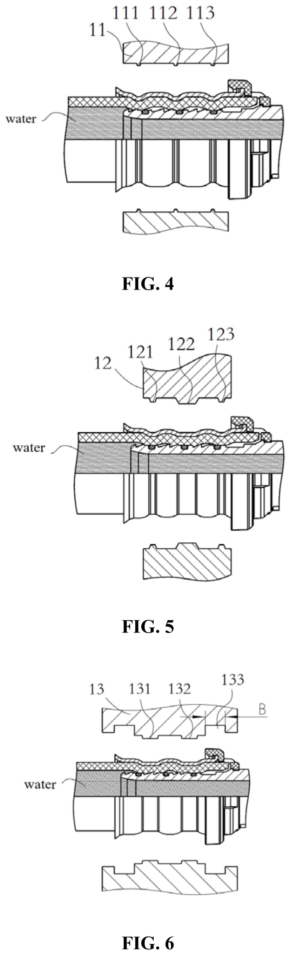

As shown in FIG. 4, when the compression connection joint of the present invention is compressed by using a H-type compression ring 11, both a fourth annular tooth 111 and a fifth annular tooth 112 on the H-type compression ring 11 are not aligned with the sealing grooves in the insertion portion 5, but it still enables the sealing rings 4 in the first sealing groove 701 and the second sealing groove 702 to be compressed and deformed to a certain extent, and a sixth annular tooth 113 presses directly against the third sealing groove 703 to ensure that one sealing ring 4 is fully compressed, thereby achieving the sealing effect.

As shown in FIG. 5, when the compression connection joint of the present invention is compressed by using an RF-type compression ring 12, a seventh annular tooth 121 and an eighth annular tooth 122 on the RF-type compression ring 12 are aligned with the positions of the first sealing groove 701 and the second sealing groove 702, respectively, so that the sealing rings 4 in the grooves are in a completely compressed state, respectively. Although the ninth annular tooth 123 is not aligned with the third sealing groove 703, it enables the sealing ring 4 in the groove to be compressed and deformed to a certain extent, thereby achieving the sealing effect.

As shown in FIG. 6, when the compression connection joint of the present invention is compressed by using a TH-type compression ring 13, a tenth annular tooth 131 on the TH-type compression ring 13 presses towards the first sealing groove 701, so that the sealing ring 4 in the first sealing groove 701 is compressed and deformed to a certain extent, and an eleventh annular tooth 132 is aligned with the third sealing groove 703, so that the sealing ring 4 in the groove is completely compressed and deformed, thereby achieving the sealing effect.

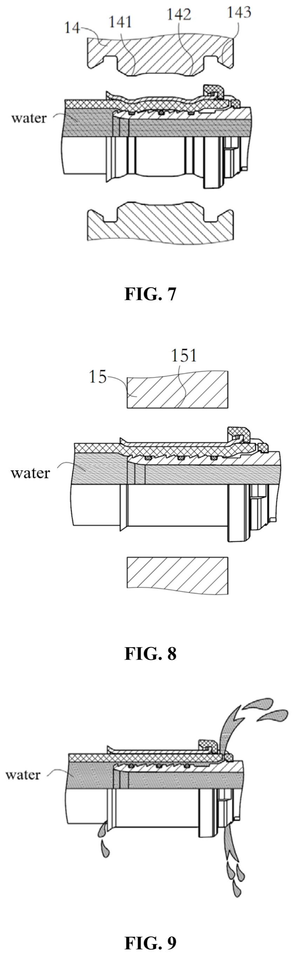

As shown in FIG. 7, when the compression connection joint of the present invention is compressed by using a B-type compression ring 14, a thirteenth annular tooth 141 and a fourteenth annular tooth 142 on the B-type compression ring 14 are aligned with the first sealing groove 701 and the third sealing groove 703, respectively, so that the sealing rings 4 facing them are both completely compressed and deformed, thereby achieving the sealing effect.

As shown in FIG. 8, when the compression connection joint of the present invention is compressed by using an RFZ-type compression ring 15, an inner annular surface 151 of the RFZ-type compression ring 15 is entirely compressed against the compressing sleeve 2, so that all the three sealing rings 4 can be brought into a compressed state, thereby achieving the sealing effect.

It can be seen that the structure of the insertion portion 5 can be matched with the annular teeth on any type of compression ring, thus the compression connection joint of the present invention is suited to the above-mentioned various types of compression tools, has a wide range of applications, and meets different compression requirements. Moreover, no matter which type of compression ring described above is used, the compression connection joint of the present invention can connect pipes and achieve a sealed connecting effect with good sealing performance.

In addition, the present invention is convenient and easy to operate, enables sealing and leakage prevention, can be matched with different types of compression rings, and has a wide range of applications.

In some implementations, a second square toothed ring 140 and a U-shaped groove 150 are sequentially disposed at the insertion portion 5 along the direction close to the root portion 6, and both the second square toothed ring 140 and the U-shaped groove 150 are disposed on one side of the three sealing grooves close to the root portion 6 of the insertion portion 5.

The second square toothed ring 140 and the U-shaped groove 150 in cooperation with the third sealing groove 703, on the one hand, can serve to limit the sealing ring 4, and, on the other hand, allow the compression connection joint to have a better sealing effect after being compressed by using a compression ring. The U-shaped groove in some embodiments has a certain width, which is greater than the width of the sealing groove.

In some implementations, a first tapered surface 18 is disposed at an end portion of the insertion portion 5, and a second inverted toothed ring 19 is disposed between the first tapered surface 18 and the three sealing grooves.

The existence of the first tapered surface 18 can play a role in guiding a pipe to be inserted, which facilitates faster and more convenient alignment of a pipe with the accommodating cavity and its insertion into the accommodating cavity. The second inverted toothed ring 19 can cooperate with the first inverted toothed ring 9 to prevent easy detachment of the pipe and improve the stability of the structure.

In some implementations, both the first inverted toothed rings 9 and the second inverted toothed ring 19 are provided with a guide beveled surface and a stop vertical surface, and the stop vertical surface is disposed close to the root portion 6 of the insertion portion 5. The stop vertical surface is perpendicular to the axis of the insertion portion 5 to provide a better stopping effect.

Specifically, in some embodiments, the maximum diameter of the first inverted toothed ring 9 and the second inverted toothed ring 19 is greater than the maximum diameter of the first square toothed ring 8 to improve the stopping effect.

In some implementations, a transitional notch 20 is disposed on one side of the three sealing grooves close to the end portion of the insertion portion 5. The transitional notch 20 in some embodiments can be a square notch, which facilitates a closer fit between the pipe and the insertion portion 5.

In some implementations, an annular flange 201 is disposed at one end of the compressing sleeve 2 inserted into the retaining ring 3, and the retaining ring 3 is provided with a recess 302 for accommodating the annular flange 201.

The annular flange 201 is formed at an angle A of about 90 degrees. Such a design enables a more stable connection between the compressing sleeve 2 and the retaining ring 3. In some embodiments, the other end of the compressing sleeve 2 can also be provided with an annular small-angled flange 202 at a smaller angle. Such a design facilitates the insertion of a pipe.

In some implementations, a ring buckle 301 is disposed at one end of the retaining ring connecting with the insertion portion 5, and the insertion portion 5 is provided with an annular groove 21 for accommodating the ring buckle 301. The annular groove 21 serves to limit the ring buckle, which facilitates a better connection between the compressing sleeve 2 and the joint body 1.

In some implementations, the retaining ring 3 is provided with an observation hole 303 communicating with the accommodating cavity, and the observation hole 303 is located between the ring buckle 301 and the recess 302.

As shown in FIG. 9, when a pipe is inserted, it can be judged from the observation hole 303 whether the pipe has been inserted in place. When the connection of the entire pipe system is completed, the construction personnel must test the water pressure of the pipe system by introducing water therethrough. If there is a connection joint uncompressed or forgotten to be compressed in the pipe system, water will flow out quickly from the observation hole 303 of the retaining ring 3, so that this situation can be easily discovered by the construction personnel, and rapid leakage detection is enabled, so as to achieve the function of preventing omission in compressing.

In some embodiments, the maximum outer diameter of the sealing ring 4 is less than or equal to the maximum outer diameter of the insertion portion 5. In such a design, when the connection joint is not compressed, water can pass through the gap between the pipe and the insertion portion 5 more easily, and flow out from the observation hole 303, so that rapid leakage occurs at the connection joint forgotten to be compressed. In this way, the construction personnel can quickly find out a connection joint that is omitted in compressing during the pressure detection test, thereby improving the construction efficiency and improving the safety factor.

In some implementations, the retaining ring 3 is provided with a bevel angle 305 at its end remote from the end portion of the insertion portion 5. When the B-type compression ring 14 is used for compression, the bevel angle 305 corresponds to the second tapered surface 143 of the B-type compression ring 14, but will not collide therewith during compression, with the bevel angle 305 serving as a clearance feature.

In some implementations, the width C of the maximum outer ring 304 of the retaining ring 3 is less than and close to the width B of a compression groove 133, which contributes to more accurate positioning during compressing with the TH-type compression ring 13.

In some implementations, the inner surface of the compressing sleeve 2 is provided with a tightening ring, which further avoids easy detachment of a pipe.

Another embodiment of the present application provides a pipe, including the compression connection joint described in any one of the foregoing implementations.

The above description is merely illustrative of preferred embodiments of the present invention and is not intended to limit the present invention. For those skilled in the art, various modifications and variations can be made to the present invention. Any modifications, equivalent alternatives, improvements, and so on made within the spirit and principle of the present invention are intended to be encompassed within the scope of protection of the present invention.

### INDUSTRIAL APPLICABILITY

The structure of the insertion portion in the joint body can be matched with annular teeth on any of six types of compression rings, namely U-type, H-type, RF-type, TH-type, B-type, and RFZ-type, and is thus suited to the above-mentioned various types of compression tools. It has a wide range of applications and meets different compression requirements. Moreover, no matter which type of compression ring described above is used, the compression connection joint of the present invention can connect pipes and achieve a sealed connecting effect with good sealing performance.

In addition, the present invention is convenient and easy in operation, enables sealing and leakage prevention, is suited to six types of compression rings, namely U-type, H-type, RF-type, TH-type, B-type, and RFZ-type, and thus has a wide range of applications.

## Claims

1. A compression connection joint, **characterized by** comprising a joint body, a compressing sleeve, a retaining ring, and a sealing ring, wherein the joint body comprises an insertion portion, the retaining ring is disposed at a root portion of the insertion portion, and the compressing sleeve is sleeved around the insertion portion and forms, together with the insertion portion and the retaining ring, an accommodating cavity for insertion of a pipe, wherein
three sealing grooves are sequentially disposed in an outer surface of the insertion portion along an axial direction, one sealing ring is correspondingly disposed in each of the sealing grooves, and one first square toothed ring and at least two first inverted toothed rings are sequentially disposed on the insertion portion between two adjacent sealing grooves along a direction close to the root portion of the insertion portion.

2. The compression connection joint according to claim 1, wherein a second square toothed ring and a U-shaped groove are sequentially disposed at the insertion portion along the direction close to the root portion, and both the second square toothed ring and the U-shaped groove are disposed on one side of the three sealing grooves close to the root portion of the insertion portion.

3. The compression connection joint according to claim 1 or 2, wherein a first tapered surface is disposed at an end portion of the insertion portion, and a second inverted toothed ring is disposed between the first tapered surface and the three sealing grooves.

4. The compression connection joint according to claim 3, wherein both the first inverted toothed rings and the second inverted toothed ring are provided with a guide beveled surface and a stop vertical surface, and the stop vertical surface is disposed close to the root portion of the insertion portion.

5. The compression connection joint according to any one of claims 1 to 4, wherein a transitional notch is disposed on one side of the three sealing grooves close to the end portion of the insertion portion.

6. The compression connection joint according to any one of claims 1 to 5, wherein one end of the compressing sleeve is inserted into the retaining ring, an annular flange is disposed at the one end of the compressing sleeve that is inserted into the retaining ring, and the retaining ring is provided with a recess for accommodating the annular flange.

7. The compression connection joint according to claim 6, wherein a ring buckle is disposed at one end of the retaining ring end connecting with the insertion portion, and the insertion portion is provided with an annular groove for accommodating the ring buckle.

8. The compression connection joint according to claim 7, wherein the retaining ring is provided with an observation hole communicating with the accommodating cavity, and the observation hole is located between the ring buckle and the recess.

9. The compression connection joint according to any one of claims 1 to 8, wherein the retaining ring is provided with a bevel angle at one end remote from the end portion of the insertion portion.

10. A pipe, **characterized by** comprising the compression connection joint according to any one of claims 1 to 9.
